# EUROPEAN PATENT APPLICATION

(11) **EP 4 391 140 A1**
(43) Date of publication of application: **26.06.2024**
(21) Application number: 23216021.8
(22) Date of filing: 12.12.2023
(51) Int. Cl.: H01M 10/0585, H01M 10/0565, H01M 10/0562, H01M 10/052, H01M 10/0525, H01M 4/04, H01M 4/70

(54) **ELECTRODE BODY, SOLID-STATE BATTERY, AND METHOD OF MANUFACTURING ELECTRODE BODY**

(30) Priority: 20.12.2022 JP 2022203674
(71) Applicant: TOYOTA JIDOSHA KABUSHIKI KAISHA, Toyota-shi, Aichi-ken, 471-8571 (JP)
(72) Inventor: SAKAMOTO, Ryuto, Aichi-ken, 471-8571 (JP)
(74) Representative: D Young & Co LLP

(57) **Abstract**

An electrode body, comprising, in the following order, a first collector, a first active material layer, an electrolyte layer, a second active material layer and a second collector, wherein: the first collector has an extending portion that extends outward from the first active material layer, the electrolyte layer, the second active material layer and the second collector, and the extending portion includes a region having a width that is smaller than a maximum width of the first collector.

## Description

### BACKGROUND

### Technical Field

The present disclosure relates to an electrode body, a solid-state battery, and a method of manufacturing an electrode body.

### Related Art

There are electrode bodies at which, in order to electrically connect the electrode body to an external device or the like, a member for electrical connection with an external device or the like is exposed at a side surface of the electrode body when the electrode body is viewed in the thickness direction.

For example, Japanese Patent Application Laid-Open (JP-A) No. 2019-207746 proposes "an electrode of a layered-type battery comprising an electrode collector foil, an electrode composite material layer formed on the electrode collector foil, and a separator formed on the electrode composite material layer, wherein the electrode has an electrode layered portion and an electrode terminal portion that projects-out from the electrode layered portion, and the electrode composite material layer is exposed when the electrode terminal portion is viewed from a layering direction of the electrode".

Here, when an electrode body that has a member exposed at a side surface is housed in a battery, there are cases in which the exposed member must be bent. In such a case, at the time of bending the member, there are cases in which the exposed member is severed at the side surface, and the degrees of freedom in the shape of the battery may be low. Therefore, at electrode bodies having a member that is exposed at a side surface, there is demand for the development of an electrode body at which the exposed member is resistant to bending.

### SUMMARY

A topic that an embodiment of the present disclosure addresses is the providing of an electrode body at which, even if a member (i.e., the extending portion at the electrode body relating to the present disclosure) that is exposed at a side surface is bent, it is difficult for severing of that member to occur.

A topic that another embodiment relating to the present disclosure addresses is the providing of a solid-state battery that is provided with an electrode body at which, even if a member that is exposed at a side surface is bent, it is difficult for severing of that member to occur.

A topic that yet another embodiment relating to the present disclosure addresses is the providing of a method of manufacturing an electrode body by which there can be obtained an electrode body at which, even if a member that is exposed at a side surface is bent, it is difficult for severing of that member to occur.

Means for addressing the above-described topics include the following embodiments.
<1> An electrode body having, in the following order, a first collector, a first active material layer, an electrolyte layer, a second active material layer and a second collector, wherein:
   the first collector has an extending portion that extends outward from the first active material layer, the electrolyte layer, the second active material layer and the second collector, and
   the extending portion includes a region having a width that is smaller than a maximum width of the first collector.
<2> The electrode body of <1>, wherein a minimum width of the extending portion is greater than or equal to 70% and less than or equal to 80% of a maximum width of the first collector.
<3> The electrode body of <1> or <2>, wherein a total Young's modulus of the first active material layer, the electrolyte layer and the second active material layer is greater than or equal to 6 GPa.
<4> A solid-state battery having the electrode body of any one of <1> through <3>.
<5> A method of manufacturing an electrode body, the method having:
   layering, in the following order, a substrate, a first active material layer, an electrolyte layer and a second active material layer, and obtaining a layered body having a region in which the substrate extends outward from the first active material layer, the electrolyte layer and the second active material layer; and
   cutting off a portion of the region at which the substrate extends outward, at a position that is apart from a region at which the first active material layer, the electrolyte layer and the second active material layer are layered.

In accordance with an embodiment of the present disclosure, there is provided an electrode body at which, even if a member (i.e., the extending portion at the electrode body relating to the present disclosure) that is exposed at a side surface is bent, it is difficult for severing of that member to occur.

In accordance with another embodiment relating to the present disclosure, there is provided a solid-state battery that is provided with an electrode body at which, even if a member that is exposed at a side surface is bent, it is difficult for severing of that member to occur.

In accordance with yet another embodiment relating to the present disclosure, there is provided a method of manufacturing an electrode body by which there can be obtained an electrode body at which, even if a member that is exposed at a side surface is bent, it is difficult for severing of that member to occur.

### BRIEF DESCRIPTION OF THE DRAWINGS

Exemplary embodiments of the present disclosure will be described in detail based on the following figures, wherein:
Fig. 1 is a schematic perspective view illustrating an example of a layered structure of an electrode body relating to the present disclosure;
Fig. 2 is a schematic top view illustrating the example of the layered structure of the electrode body relating to the present disclosure;
Fig. 3A through Fig. 3D are schematic top views illustrating examples of an extending portion relating to the present disclosure;
Fig. 4E through Fig. 4G are schematic top views illustrating examples of the extending portion relating to the present disclosure;
Fig. 5A and Fig. 5B are schematic perspective views exemplifying the electrode body and collector terminals relating to the present disclosure;
Fig. 6A and Fig. 6B are schematic perspective views exemplifying collectors, the collector terminals, and a laminate film relating to the present disclosure;
Fig. 7A through Fig. 7D are schematic side views exemplifying the electrode body and the collector terminal relating to the present disclosure;
Fig. 8 is a schematic side view illustrating an example of a solid-state battery relating to the present disclosure;
Fig. 9 is a drawing in which an example of the solid-state battery relating to the present disclosure is seen in a side view from the collector terminal side;
Fig. 10 is a drawing in which an example of the solid-state battery relating to the present disclosure is seen in a plan view from the thickness direction of the solid-state battery;
Fig. 11 is a drawing in which the example of the solid-state battery relating to the present disclosure is seen in a plan view from the thickness direction of the solid-state battery;
Fig. 12A through Fig. 12D are schematic side views in which portions of examples of the solid-state battery relating to the present disclosure are seen in a side view from the collector terminal side;
Fig. 13A and Fig. 13B are schematic sectional views exemplifying a portion of the battery relating to the present disclosure;
Fig. 14A through Fig. 14D are schematic side views exemplifying a portion of the battery relating to the present disclosure;
Fig. 15A through Fig. 15C are schematic side views exemplifying a second covering step relating to the present disclosure;
Fig. 16A through Fig. 16E are schematic side views exemplifying the second covering step relating to the present disclosure;
Fig. 17A and Fig. 17B are schematic side views exemplifying the second covering step relating to the present disclosure;
Fig. 18A through Fig. 18C are schematic side views exemplifying a jig in the present disclosure;
Fig. 19 is a schematic top view of an electrode body that is fabricated in the Examples and in a Reference Example;
Fig. 20 is a schematic top view of an electrode body that is fabricated in the Comparative Examples; and
Fig. 21 is a schematic sectional view illustrating an example of the solid-state battery.

### DETAILED DESCRIPTION

Embodiments that are examples of the present disclosure are described hereinafter. The descriptions thereof and the Examples exemplify embodiments, and are not intended to limit the scope of the invention.

In numerical value ranges that are expressed in a stepwise manner in the present specification, the upper limit value or the lower limit value listed in a given numerical value range may be substituted by the upper limit value or the lower limit value of another numerical value range that is expressed in a stepwise manner. Further, in the numerical value ranges put forth in the present specification, the upper limit value or the lower limit value listed in a given numerical value range may be substituted by a value set forth in the Examples.

Each component may contain plural types of the corresponding material.

When amounts of respective components within a composition are listed, if there are plural types of materials corresponding to the respective components in the composition, the amount means the total amount of the plural types of materials existing in the composition, unless otherwise indicated.

The term "step" is not only an independent step, and includes steps that, in a case in which that step cannot be clearly distinguished from another step, achieve the intended object of that step.

### <Electrode Body>

An electrode body relating to the present disclosure has a first collector, a first active material layer, an electrolyte layer, a second active material layer, and a second collector in that order. The first collector has an extending portion that extends outward from the first active material layer, the electrolyte layer, the second active material layer, and the second collector. The extending portion includes a region having a width that is smaller than the maximum width of the first collector.

Here, "width" means the length in the direction perpendicular to the direction in which the extending portion extends.

Due to the above-described structure, the electrode body relating to the present disclosure is an electrode body at which it is difficult for severing of the extending portion to occur even in cases in which the extending portion is bent. Reasons therefor are assumed to be as follows.

At the electrode body relating to the present disclosure, the first collector has the extending portion that extends outward from the first active material layer, the electrolyte layer, the second active material layer and the second collector. The extending portion includes a region having a width smaller than the maximum width of the first collector. The extending portion does not have a layer, such as an active material layer, an electrolyte layer or the like, on the surfaces thereof. Therefore, the flexibility of the extending portion is maintained. Accordingly, even in a case in which the extending portion is bent, it is difficult for severing of the extending portion to occur.

Details of the electrode body relating to the present disclosure are described hereinafter.

### (Layered Structure of Electrode Body)

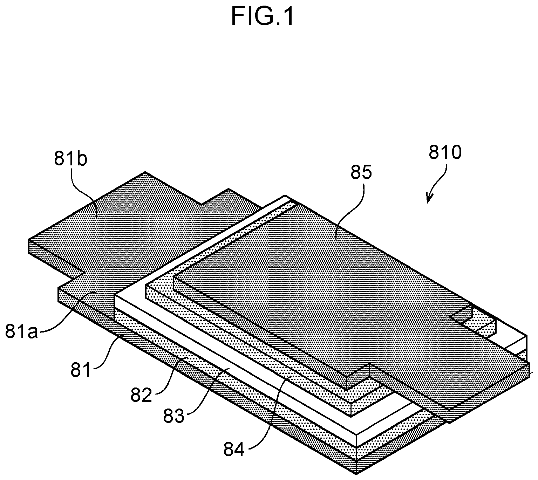

An example of the layered structure of the electrode body relating to the present disclosure is described with reference to Fig. 1.

Fig. 1 is a schematic perspective view of an embodiment of the electrode body relating to the present disclosure.

An electrode body 810 has a first collector 81, a first active material layer 82, an electrolyte layer 83, a second active material layer 84 and a second collector 85 in that order in the thickness direction. The first collector 81 has an extending portion 81a that extends outward from the first active material layer 82, the electrolyte layer 83, the second active material layer 84, and the second collector 85. The extending portion 81a has a region 81b having a width that is smaller than the maximum width of the first collector 81.

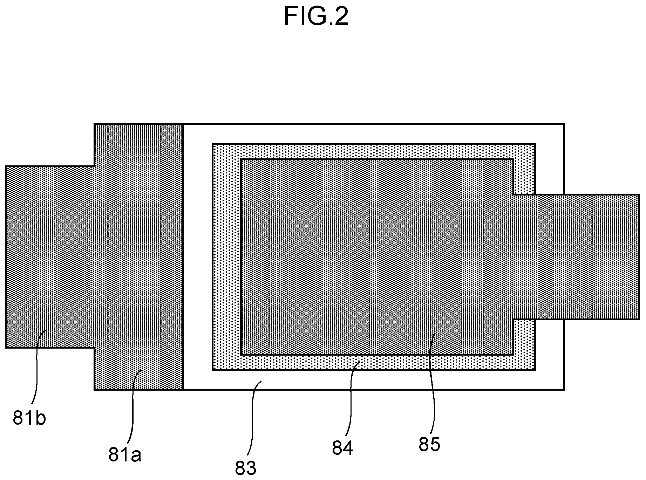

Fig. 2 illustrates the electrode body 810 in a top view in which the electrode body 810 illustrated in Fig. 1 is viewed from above the second collector 85. Reference numerals in Fig. 2 have the same meanings as those in Fig. 1.

Here, in a case in which the first collector 81 is a negative electrode collector for example, the first active material layer 82 is a negative electrode active material layer, the second active material layer 84 is a positive electrode active material layer, and the second collector 85 is a positive electrode collector.

On the other hand, in a case in which the first collector 81 is a positive electrode collector for example, the first active material layer 82 is a positive electrode active material layer, the second active material layer 84 is a negative electrode active material layer, and the second collector 85 is a negative electrode collector.

Details of the electrode body relating to the present disclosure are described hereinafter, but there are cases in which the reference numerals are omitted.

### (First Collector)

In the electrode body relating to the present disclosure, the first collector has the extending portion that extends outward from the first active material layer, the electrolyte layer, the second active material layer and the second collector, and the extending portion includes a region having a width smaller than the maximum width of the first collector.

The first collector is a positive electrode collector or a negative electrode collector. The material of the first collector is, for example, metal, carbon or the like.

Examples of the material of the first collector are stainless steel, aluminum, nickel, iron, titanium, carbon and the like, and an aluminum alloy foil or an aluminum foil is preferable. The aluminum alloy foil and aluminum foil may be manufactured by using a powder. Examples of the form of the first collector are the form of a foil and the form of a mesh. It is preferable that the first collector be in the form of a foil.

The thickness of the first collector is not particularly limited, but from the standpoint of bending resistance, is preferably greater than or equal to 10 *µ*m and less than or equal to 30 *µ*m, and more preferably greater than or equal to 12 *µ*m and less than or equal to 20 *µ*m.

From the standpoint of bending resistance, the minimum width of the extending portion with respect to the maximum width of the first collector is preferably greater than or equal to 40% and less than or equal to 80%, and more preferably greater than or equal to 50% and less than or equal to 70%, and even more preferably greater than or equal to 55% and less than or equal to 65%.

From the standpoint of bending resistance, the maximum width of the extending portion with respect to the maximum width of the first collector is preferably greater than or equal to 40% and less than or equal to 100%, and more preferably greater than or equal to 50% and less than or equal to 100%, and even more preferably greater than or equal to 55% and less than or equal to 100%.

The minimum width of the extending portion is appropriately selected in accordance with the intended use of the electrode body. In a case in which the electrode body is used in a battery that is utilized in a hybrid vehicle (HEV) for example, an example of the minimum width of the extending portion is greater than or equal to 30 mm.

The maximum width of the extending portion is appropriately selected in accordance with the intended use of the electrode body. In a case in which the electrode body is used in a battery that is utilized in an HEV for example, an example of the maximum width of the extending portion is less than or equal to 110 mm.

The maximum length of the extending portion in the extending direction (also called the longitudinal direction) is preferably greater than or equal to 40% with respect to the maximum length of the first collector in the longitudinal direction.

The maximum length of the first collector in the longitudinal direction is appropriately selected in accordance with the intended use of the electrode body. In a case in which the electrode body is used in a battery that is utilized in an HEV for example, an example of this maximum length is greater than or equal to 3 mm and less than or equal to 15 mm.

"Longitudinal" means the direction parallel to the extending direction of the extending portion.

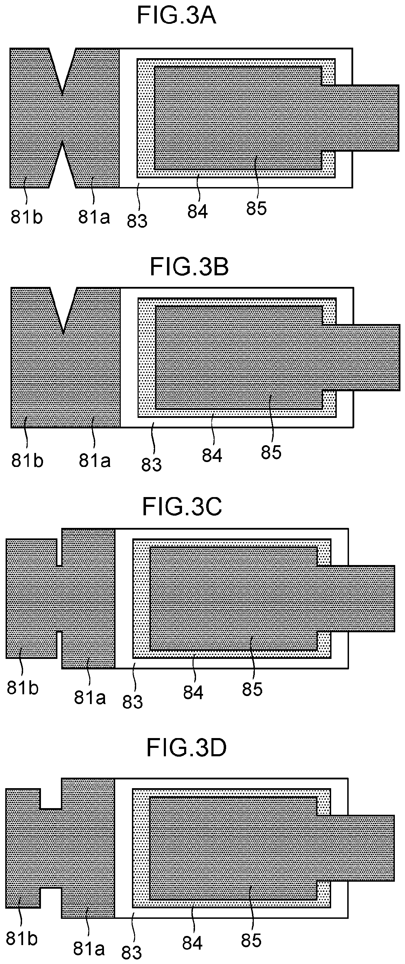

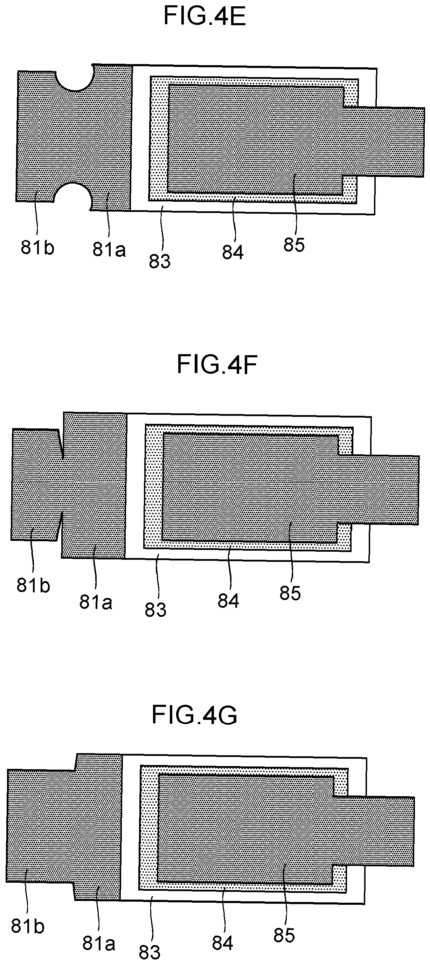

The shape of the extending portion is not particularly limited. Examples are the shape illustrated in Fig. 1 and Fig. 2, and shapes such as those illustrated in Fig. 3A through Fig. 4G.

Fig. 3A through Fig. 4G are schematic top views seen from the positive electrode collector side of the electrode body relating to an embodiment of the present disclosure. Reference numerals in Fig. 3A through Fig. 4G have the same meanings as in Fig. 1.

The shape illustrated in Fig. 1 and Fig. 2 is preferable from the standpoint of bending resistance.

### (First Active Material Layer)

The collector relating to the present disclosure has a first active material layer that is layered on the first collector.

Examples of the first active material layer are a positive electrode active material layer and a negative electrode active material layer.

The positive electrode active material layer contains at least a positive electrode active material. As needed, the positive electrode active material layer may contain a conduction assistant, a solid electrolyte, a binder, and other components.

It is preferable that the positive electrode active material contain a lithium composite oxide. The lithium composite oxide may contain at least one type selected from the group consisting of F, Cl, N, S, Br and I. Further, the lithium composite oxide may have a crystal structure belonging to at least one space group selected from space groups R-3m, Immm, and P63-mmc (also called P63mc, P6/mmc). In the lithium composite oxide, the main sequence of a transition metal, oxygen and lithium may be an O2-type structure.

Examples of lithium composite oxides having a crystal structure belonging to R-3m are compounds expressed by LiₓMe_{y}O*_{α}*X*_{β}* (Me represents at least one type selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si and P, and X represents at least one type selected from the group consisting of F, Cl, N, S, Br and I, and 0.5≤x≤1.5, 0.5≤y≤1.0, 1≤*α*<2, 0<*β*≤1 are satisfied).

Examples of lithium composite oxides having a crystal structure belonging to Immm are composite oxides expressed by Liₓ₁M¹A¹₂ (1.5≤x1≤2.3 is satisfied, M¹ includes at least one type selected from the group consisting of Ni, Co, Mn, Cu and Fe, A¹ includes at least oxygen, and the ratio of the oxygen contained in A¹ is greater than or equal to 85 atom%) (a specific example is Li₂NiO₂), and composite oxides expressed by Liₓ₁M^{1A}₁₋ₓ₂M^{1B}ₓ₂O_{2-y}A²_{y} (0≤x2≤0.5 and 0≤y≤0.3, at least one of x2 and y is not 0, M^{1A} represents at least one type selected from the group consisting of Ni, Co, Mn, Cu and Fe, M^{1B} represents at least one type selected from the group consisting of Al, Mg, Sc, Ti, Cr, V, Zn, Ga, Zr, Mo, Nb, Ta and W, and A2 represents at least one type selected from the group consisting of F, Cl, Br, S and P). Examples of lithium composite oxides having a crystal structure belonging to P63-mmc are composite oxides expressed by M1ₓM2_{y}O₂ (M1 represents an alkali metal (at least one of Na and K is preferable), M2 represents a transition metal (at least one type selected from the group consisting of Mn, Ni, Co and Fe is preferable), and x+y satisfies 0<x+y≤2).

Examples of lithium composite oxides having an O2-type structure are composite oxides expressed by Liₓ[Li*_{α}*(MnₐCo_{b}M_{c})_{1-*α*}]O₂ (0.5<x<1.1, 0.1<*α*<0.33, 0.17<a<0.93, 0.03<b<0.50, 0.04<c<0.33, and M represents at least one type selected from the group consisting of Ni, Mg, Ti, Fe, Sn, Zr, Nb, Mo, W and Bi). Specific examples are Li_{0.744}[Li_{0.145}Mn_{0.625}Co_{0.115}Ni_{0.115}]O₂ and the like.

Examples of the conduction assistant are carbon materials, metal materials, and conductive polymer materials. Examples of the carbon materials are carbon black (e.g., acetylene black, furnace black, ketjen black, and the like), filamentous carbon (e.g., vapor grown carbon fibers, carbon nanotubes, carbon nanofibers, and the like), graphite, fluorocarbons, and the like. Examples of the metal materials are metal powders (e.g., aluminum powder and the like, conductive whiskers (e.g., zinc oxide, potassium titanate, and the like), conductive metal oxides (e.g., titanium oxide and the like), and the like. Examples of the conductive polymer materials are polyaniline, polypyrrole, polythiophene, and the like. One type of conduction assistant may be used alone, or two or more types may be used by being mixed together.

It is preferable that the solid electrolyte is at least one type of solid electrolyte selected from the group of solid electrolytes consisting of sulfide solid electrolytes, oxide solid electrolytes, and halide solid electrolytes.

Specific examples of the sulfide solid electrolytes, oxide solid electrolytes, and halide solid electrolytes are the same as those described later.

Examples of the binder are vinyl halide resins, rubbers, polyolefin resins, and the like. Examples of vinyl halide resins are polyvinylidene fluoride (PVdF), copolymers (PVdF-HFP) of polyvinylidene fluoride and hexafluoropropylene, and the like. Examples of polyolefin resins are butadiene rubber (BR), acrylate-butadiene rubber (ABR), styrene-butadiene rubber (SBR), acrylonitrile-butadiene rubber (NBR), butyl rubber (isobutylene-isoprene rubber), and the like. Examples of polyolefin resins are polyethylene, polypropylene, and the like. The binder may be a diene rubber containing a double bond in the main chain, e.g., butadiene rubber in which 30 mol% or more of the entire amount is butadiene.

Examples of the other components are oxide solid electrolytes, halide solid electrolytes, thickeners, surfactants, dispersants, wetting agents, antifoaming agents, solvents and the like.

The negative electrode active material layer contains at least a negative electrode active material. As needed, the negative electrode active material layer may contain at least one of a solid electrolyte for the negative electrode, a conduction assistant, and a binder. Examples of the negative electrode active material are Li-based active materials such as lithium metals and the like, carbon-based active materials such as graphite and the like, oxide-based active materials such as lithium titanate and the like, and Si-based active materials such as Si alone and the like. Examples of the conduction assistant, the solid electrolyte for the negative electrode, and the binder that are used in the negative electrode active material layer are the same as those exemplified as the conduction assistant contained in the positive electrode active material layer, and the solid electrolyte contained in the solid electrolyte layer, and the binder.

### (Electrolyte Layer)

The electrode body relating to the present disclosure has an electrolyte layer that is layered on the first active material layer.

The electrolyte layer contains at least an electrolyte. Examples of the electrolyte are solid electrolytes.

In a case in which the electrolyte layer is a layer containing a solid electrolyte (a solid electrolyte layer), the solid electrolyte layer preferably contains at least one selected from the group consisting of sulfide solid electrolytes, oxide solid electrolytes and halide solid electrolytes.

The sulfide solid electrolyte preferably contains sulfur (S) as the main component that is an anion element, and further, preferably contains, for example, the element Li, element A and the element S. Element A is at least one type selected from the group consisting of P, As, Sb, Si, Ge, Sn, B, Al, Ga and In. The sulfide solid electrolyte may further contain at least one of O and a halogen element. Examples of the halogen element (X) are F, Cl, Br, I and the like. The composition of the sulfide solid electrolyte is not particularly limited, and examples are xLi₂S•(100-x)P₂S₅ (70≤x≤80) and yLiI•zLiBr• (100-y-z)(xLi₂S•(1-x)P₂S₅) (0.7≤x≤0.8, 0≤y≤30, 0≤z≤30). The sulfide solid electrolyte may have the composition expressed by following general formula (1).

Li₄₋ₓGe₁₋ₓPₓS₄ (0<x<1) ... formula (1)

In formula (1), at least some of the Ge may be substituted by at least one selected from the group consisting of Sb, Si, Sn, B, Al, Ga, In, Ti, Zr, V and Nb. Further, at least some of the P may be substituted by at least one selected from the group consisting of Sb, Si, Sn, B, Al, Ga, In, Ti, Zr, V and Nb. Some of the Li may be substituted by at least one selected from the group consisting of Na, K, Mg, Ca and Zn. Some of the S may be substituted by a halogen. The halogen is at least one of F, Cl, Br and I.

The oxide solid electrolyte preferably contains oxygen (O) as the main component that is an anion element, and, for example, may contain Li, element Q (Q represents at least one of Nb, B, Al, Si, P, Ti, Zr, Mo, W and S), and O. Examples of the oxide solid electrolyte are garnet type solid electrolytes, perovskite type solid electrolytes, NASICON type solid electrolytes, Li-P-O solid electrolytes, Li-B-O solid electrolytes, and the like. Examples of garnet type solid electrolytes are Li₇La₃Zr₂O₁₂, Li₇₋ₓLa₃(Zr₂₋ₓNbₓ)O₁₂ (0≤x≤2), Li₅La₃Nb₂O₁₂, and the like. Examples of perovskite type solid electrolytes are (Li,La)TiO₃, (Li,La)NbO₃, (Li,Sr)(Ta,Zr)O₃ and the like. Examples of NASICON type solid electrolytes are Li(Al,Ti)(PO₄)₃, Li(Al,Ga)(PO₄)₃, and the like. Examples of Li-P-O solid electrolytes are Li₃PO₄ and LIPON (compounds in which some of the O in Li₃PO₄ is substituted with N). Examples of Li-B-O solid electrolytes are Li₃BO₃, compounds in which some of the O in Li₃BO₃ is substituted with C, and the like.

As the halide solid electrolyte, solid electrolytes containing Li, M and X (M represents at least one of Ti, Al and Y, and X represents F, Cl or Br) are suitable. Specifically, Li_{6-3z}Y_{z}X₆ (X represents Cl or Br, and z satisfies 0<z<2) and Li_{6-(4-x)b}(Ti₁₋ₓAlₓ)_{b}F₆ (0<x<1, 0<b≤1.5) are preferable. Among Li_{6-3z}Y_{z}X₆, from the standpoint of having excellent lithium ion conductivity, Li₃YX₆ (X represents Cl or Br) is more preferable, and Li₃YCl₆ is even more preferable. Further, from standpoints such as, for example, suppressing oxidative decomposition of the sulfide solid electrolyte and the like, it is preferable that Li_{6-(4-x)b}(Ti₁₋ₓAlₓ)_{b}F₆ (0<x<1, 0<b≤1.5) be contained together with a solid electrolyte such as a sulfide solid electrolyte or the like.

The solid electrolyte layer may be a single-layer structure, or may be a multilayer structure of two or more layers.

The solid electrolyte layer may contain a binder, or may not contain a binder. Examples of the binder that the solid electrolyte layer can contain are the same as the above-described binders.

### (Second Active Material Layer)

The electrode body relating to the present disclosure has a second active material layer that is layered on the electrolyte layer.

Examples of the second active material layer are a positive electrode active material layer and a negative electrode active material layer.

The composition of and preferable aspects of the positive electrode active material layer and the negative electrode active material layer are the same as those for the first active material layer.

### (Second Collector)

The electrode body relating to the present disclosure has a second collector that is layered on the second active material layer.

The second collector is a positive electrode collector or a negative electrode collector. Preferable aspects of the material and the thickness of the second collector are the same as those for the first collector.

### (Total Young's Modulus of First Active Material Layer, Electrolyte Layer and Second Active Material Layer)

At the electrode body relating to the present disclosure, the total Young's modulus of the first active material layer, the electrolyte layer and the second active material layer is preferably greater than or equal to 6 GPa, and more preferably greater than or equal to 9 GPa and less than or equal to 15 GPa, and even more preferably greater than or equal to 12 GPa and less than or equal to 14 GPa.

From the standpoint of decreasing resistance, it is preferable that the components contained within the first active material layer, the electrolyte layer and the second active material layer are dense. In this case, it is preferable that the total Young's modulus of the first active material layer, the electrolyte layer and the second active material layer is greater than or equal to 6 GPa. Conventionally, there are cases in which the portion requiring bending at the time of assembling the electrode body into a battery is a portion having these layers. In such a case, the metal foil at the bent portion may be severed due to the rigidities of these layers.

Because the electrode body relating to the present disclosure has the extending portion, even if the total Young's modulus of the first active material layer, the electrolyte layer and the second active material layer falls within the above-described numerical range, it is difficult for severing of the extending portion to occur.

### · Process for Measuring Total Young's Modulus of First Active Material Layer, Electrolyte Layer and Second Active Material Layer

The measuring of the total Young's modulus of the first active material layer, the electrolyte layer and the second active material layer is carried out in accordance with JIS K7171 (2022). The specific processes are as follows.

The measuring of the Young's modulus of the first collector is carried out in accordance with JIS K7171 (2022).

Then, the measuring of the Young's modulus is carried out in accordance with JIS K7171 (2022) by using, as the object of measurement, a layered body in which the first collector, the first active material layer, the electrolyte layer and the second active material layer are layered in that order.

Then, by subtracting the value of the Young's modulus of the first collector from the value of the Young's modulus of this layered body, the total Young's modulus of the first active material layer, the electrolyte layer and the second active material layer is calculated.

### <Solid State Battery>

The solid state battery relating to the present disclosure has the electrode body relating to the present disclosure.

Solid-state batteries include so-called all-solid-state batteries that use an inorganic solid electrolyte as the electrolyte (i.e., whose content of electrolyte liquid that is an electrolyte is 0 mass% with respect to the total amount of the electrolyte).

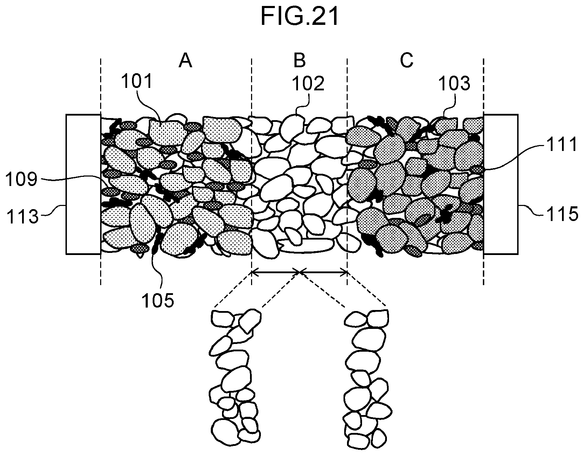

The structure of the solid-state battery of the present disclosure may be a structure having a positive electrode collector, a positive electrode active material layer, a solid electrolyte layer, a negative electrode active material layer, and a negative electrode collector in that order. For example, the structure may be that illustrated in Fig. 21. Solid electrolyte layer B in Fig. 21 may be a two-layer structure. Fig. 21 is a schematic sectional view illustrating an example of the solid-state battery. The solid-state battery illustrated in Fig. 21 has a negative electrode including a negative electrode collector 113 and a negative electrode layer A, and a solid electrolyte layer B, and a positive electrode including a positive electrode collector 115 and a positive electrode layer C. The negative electrode layer A includes a negative electrode active material 101, a conduction assistant 105, a binder 109, and a solid electrolyte 102. The positive electrode layer C includes a positive electrode active material 103, a binder 111, and the solid electrolyte 102.

Given that the set of the positive electrode layer, the solid electrolyte layer and the negative electrode layer is the power generating unit, the solid-state battery may have only one power generating unit or may have two or more power generating units. In a case in which the solid-state battery has two or more power generating units, these power generating units may be connected in series or may be connected in parallel.

The solid-state battery may be structured such that the layer end surfaces (side surfaces) of a layered structure of a positive electrode layer / a solid electrolyte layer / a negative electrode layer are sealed by a resin. The collector of the electrode may be a structure in which a shock-absorbing layer, an elastic layer or a PTC (Positive Temperature Coefficient) thermistor layer is disposed on the surface of the collector.

The shape of the solid-state battery is not particularly limited, and may be, for example, coin-shaped, cylindrical, square, sheet-shaped, button-shaped, flat or layered.

The solid-state battery relating to the present disclosure is preferably a battery having the electrode body relating to the present disclosure, a collector terminal disposed at a side surface portion of the electrode body, and a laminate film covering the electrode body.

In particular, it is preferable that the solid-state battery relating to the present disclosure has the electrode body relating to the present disclosure, a collector terminal disposed at a side surface portion of the electrode body, and a laminate film covering the electrode body, and, when the solid-state battery is viewed in a side view from the collector terminal side, the outer edge of the collector terminal is positioned further toward the inner side than the outer edge of the electrode body, and the laminate film is disposed so as to cover surfaces that structure the outer edge of the collector terminal and surfaces that structure the outer edge of the electrode body, and a fused portion, at which inner surfaces of the laminate film are fused together, is disposed on the collector terminal.

An example of the solid-state battery relating to the present disclosure is described hereinafter.

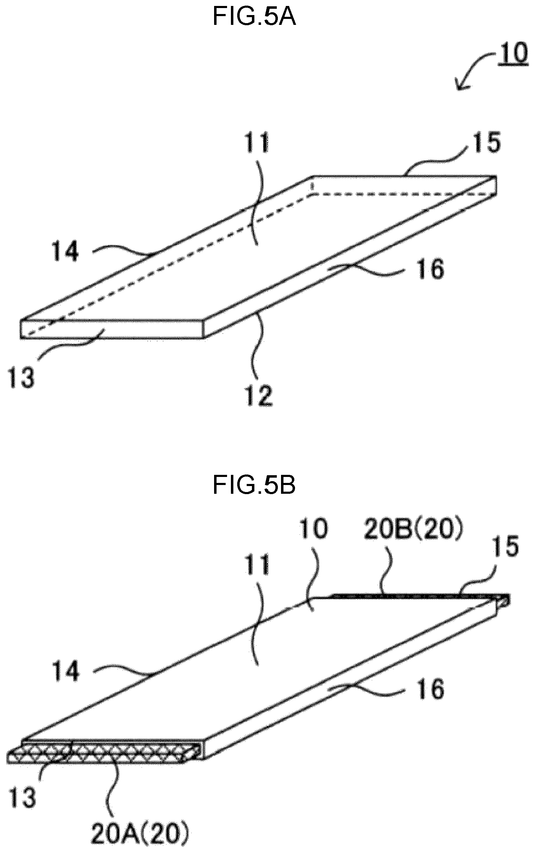

Fig. 5A and Fig. 5B are schematic perspective views exemplifying the electrode body and the collector terminals in the present disclosure. Electrode body 10 illustrated in Fig. 5A has a top surface portion 11, a bottom surface portion 12 that faces the top surface portion 11, and four side surface portions (first side surface portion 13, second side surface portion 14, third side surface portion 15 and fourth side surface portion 16) that connect the top surface portion 11 and the bottom surface portion 12. Further, in Fig. 5B, a first collector terminal 20A is disposed at the first side surface portion 13 of the electrode body 10, and a second collector terminal 20B is disposed at the third side surface portion 15 of the electrode body 10. For example, the first collector terminal 20A is a positive electrode collector terminal, and the second collector terminal 20B is a negative electrode collector terminal.

Here, the extending portion that is included in the electrode body 10 is bent and is connected to the first collector terminal 20A or the second collector terminal 20B.

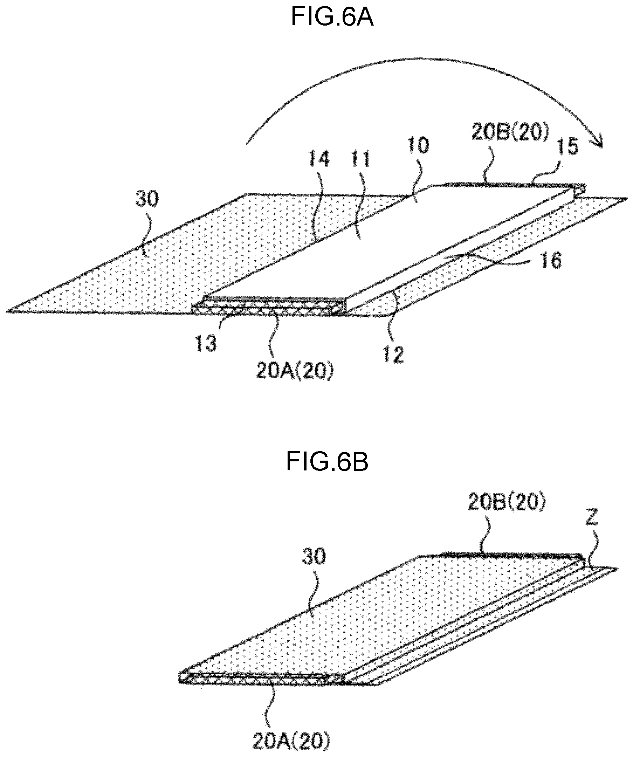

Fig. 6A and Fig. 6B are schematic perspective views exemplifying the collectors, the collector terminals and the laminate film in the present disclosure. As illustrated in Fig. 6A, laminate film 30 is a single film for example. As illustrated in Fig. 6A and Fig. 6B, the laminate film 30 is folded-over so as to cover the entireties of the bottom surface portion 12, the second side surface portion 14, the top surface portion 11 and the fourth side surface portion 16 at the electrode body 10. On the other hand, in Fig. 6B, at least a portion of the first collector terminal 20A and at least a portion of the second collector terminal 20B are positioned at the inner side of the laminate film 30 that has been folded-over.

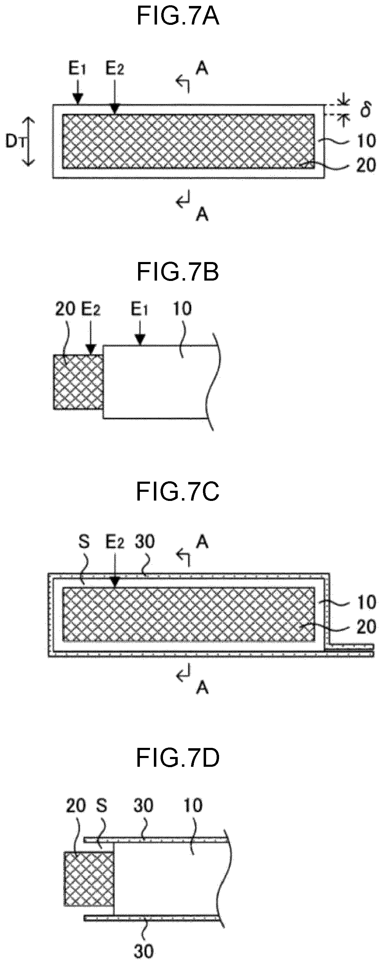

Fig. 7A is a schematic side view exemplifying the electrode body and the collector terminal in the present disclosure. Fig. 7B is a cross-sectional view along line A-A of Fig. 7A. As illustrated in Fig. 7A and Fig. 7B, when the electrode body 10 and a collector terminal 20 are viewed from the collector terminal 20 side, outer edge E₂ of the collector terminal 20 is positioned further toward the inner side than outer edge E₁ of the electrode body 10. Namely, the dimensions of the collector terminal 20 are smaller than the dimensions of the electrode body 10.

Fig. 7C is a schematic side view exemplifying the electrode body, the collector terminal and the laminate film in the present disclosure. Fig. 7D is a cross-sectional view along line A-A of Fig. 7C. As illustrated in Fig. 7C and Fig. 7D, when the electrode body 10, the collector terminal 20 and the laminate film 30 are viewed from the collector terminal 20 side, space S is formed between the laminate film 30 and the collector terminal 20.

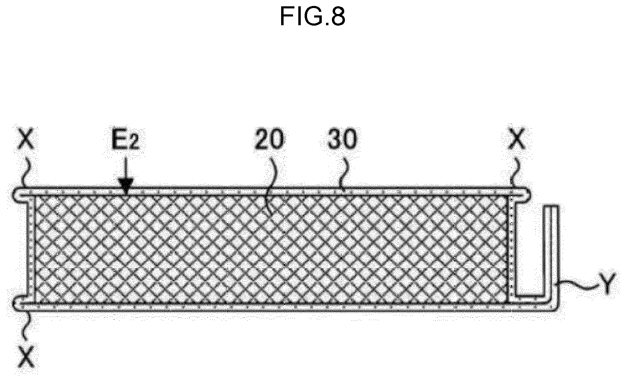

Therefore, when the collector terminal 20 is sealed by the laminate film 30, there are cases in which, due to excess portions of the laminate film 30, wrinkles form in the laminate film 30, and the ability to seal the battery deteriorates. In contrast, at the battery of the present disclosure, as illustrated in Fig. 8, fused portion X, at which the inner surfaces of the laminate film 30 (the surfaces at the collector terminal 20 side) are fused together, is disposed on the collector terminal 20.

In accordance with the present disclosure, because the fused portion is disposed on the collector terminal, the battery is a battery at which deterioration in the sealability is suppressed. As illustrated in above-described Fig. 7A through Fig. 7D, there are cases in which the dimensions of the collector terminal are smaller than the dimensions of the electrode body. By employing this relationship of the dimensions, in a case in which plural batteries are stacked for example, it is possible to prevent adjacent collector terminals from contacting one another. By preventing contact of adjacent collector terminals, it is difficult for damage to the batteries to arise. Further, when a collector terminal having such a dimensional relationship is sealed by a laminate film, for example, there are cases in which wrinkles arise in the laminate film, and the ability to seal the battery deteriorates. In the present disclosure, due to the fused portion X, at which the inner surfaces of the laminate film are fused together, being disposed on the collector terminal, the battery is a battery at which deterioration in the sealability is suppressed, even in a case in which the dimensions of the collector terminal are smaller than the dimensions of the electrode body.

### (Electrode Body)

The solid-state battery relating to the present disclosure has the electrode body relating to the present disclosure.

The shape of the electrode body is not particularly limited, and, for example, as illustrated in Fig. 5A, the electrode body has the top surface portion 11, the bottom surface portion 12 that faces the top surface portion 11, and the four side surface portions (the first side surface portion 13, the second side surface portion 14, the third side surface portion 15 and the fourth side surface portion 16) that connect the top surface portion 11 and the bottom surface portion 12. The top surface portion 11 and the bottom surface portion 12 both correspond to main surfaces of the electrode body, and the direction normal to a main surface can be defined as the thickness direction. Further, the first side surface portion 13 and the third side surface portion 15 are disposed so as to face one another. Similarly, the second side surface portion 14 and the fourth side surface portion 16 are disposed so as to face one another.

The shape of the top portion is not particularly limited, and examples thereof are quadrangular shapes such as square, rectangular, rhomboid, trapezoidal, parallelogram shaped, and the like. The shape of the top surface portion 11 in Fig. 5A is rectangular.

Further, the shape of the top surface portion may be a polygonal shape other than quadrangular, or may be a shape having curves such as circular or the like. The shape of the bottom surface portion is similar to the shape of the top surface portion. The shape of the side surface portions is not particularly limited, and examples thereof are quadrangular shapes such as square, rectangular, rhomboid, trapezoidal, parallelogram shaped, and the like.

### (Collector Terminal)

The collector terminal in the present disclosure is disposed at a side surface portion of the electrode body.

Examples of the material of the collector terminal are metals such as SUS and the like.

The battery in the present disclosure may have, with respect to one electrode body, one collector terminal or may have two or more collector terminals. In the latter case, as illustrated in Fig. 5B for example, a pair of the collector terminals 20 (the first collector terminal 20A and the second collector terminal 20B) may be disposed so as to face one another at the electrode body 10. Further, in Fig. 5B, the pair of collector terminals 20 are disposed so as to face one another in the longitudinal direction of the electrode body 10. On the other hand, although not illustrated in particular, a pair of collector terminals may be disposed so as to face one another in the short direction of the electrode body.

The shape of the collector terminal is not particularly limited, and examples thereof are quadrangular shapes such as square, rectangular, rhomboid, trapezoidal, parallelogram shaped, and the like. The shape of the collector terminal 20 in Fig. 7A is rectangular. At this rectangle, the short sides extend along a direction parallel to thickness direction D_{T}, and the long sides extend along a direction perpendicular to the thickness direction D_{T}. Further, the shape of the collector terminal may be a polygonal shape other than quadrangular, or may be a shape having curves such as circular or the like. The collector terminal may have corner portions at which two sides (rectilinear sides) intersect.

When the battery is viewed in a side view from the side of a collector terminal, the outer edge of the collector terminal is positioned further toward the inner side than the outer edge of the electrode body. For example, as illustrated in Fig. 7A, the outer edge E₂ of the collector terminal 20 is positioned further toward the inner side than the outer edge E₁ of the electrode body 10. In other words, the outer edge E₂ of the collector terminal 20 is, over the entire periphery thereof, contained in the outer edge E₁ of the electrode body 10. The dimensions of the collector terminal 20 are smaller than the dimensions of the electrode body 10.

For example, in Fig. 7A, the length (the entire peripheral length) of the outer edge E₁ at the electrode body 10 is L1, and the length (the entire peripheral length) of the outer edge E₂ of the collector terminal 20 is L2. The ratio (L2/L1) of L2 with respect to L1 is, for example, greater than or equal to 0.7 and less than 1, and may be greater than or equal to 0.8 and less than or equal to 0.95. Further, for example, in Fig. 7A, the length of the outer edge E₁ in the thickness direction D_{T} is La, and the length of the outer edge E₂ in the thickness direction D_{T} is Lb. The ratio (Lb/La) of Lb with respect to La is, for example, greater than or equal to 0.5 and less than 1, and may be greater than or equal to 0.8 and less than or equal to 0.95. Further, for example, in Fig. 7A, the length of the outer edge E₁ in the direction perpendicular to the thickness direction D_{T} is Le, and the length of the outer edge E₂ in the direction perpendicular to the thickness direction D_{T} is Ld. The ratio (Ld/Le) of Ld with respect to Le is, for example, greater than or equal to 0.5 and less than 1, and may be greater than or equal to 0.8 and less than or equal to 0.95. Further, for example, in Fig. 7A, the length of the gap between the outer edge E₁ and the outer edge E₂ is *δ*. *δ* is greater than 0 mm, and may be greater than or equal to 0.3 mm, or may be greater than or equal to 0.5 mm. On the other hand, for example, *δ* is less than or equal to 1.5 mm.

### (Laminate Film)

The laminate film in the present disclosure covers the electrode body, and seals the electrode body together with the collector terminals.

The laminate film in the present disclosure has at least a structure in which a heat fused layer and a metal layer are laminated. The laminate film may have a heat fused layer, a metal layer and a resin layer in that order along the thickness direction. Examples of the material of the heat fused layer are olefin resins such as polypropylene (PP), polyethylene (PE) and the like. Examples of the material of the metal layer are aluminum, aluminum alloys, stainless steel and the like. Examples of the material of the resin layer are polyethylene terephthalate (PET) and nylon. The thickness of the heat fused layer is, for example, greater than or equal to 40 *µ*m and less than or equal to 100 *µ*m. The thickness of the metal layer is, for example, greater than or equal to 30 *µ*m and less than or equal to 60 *µ*m. The thickness of the resin layer is, for example, greater than or equal to 20 *µ*m and less than or equal to 60 *µ*m. The thickness of the exterior body is, for example, greater than or equal to 80 *µ*m and less than or equal to 250 *µ*m.

As illustrated in Fig. 6A and Fig. 6B, when the electrode body 10 and the collector terminal 20 are viewed from the collector terminal 20 side, the laminate film 30 is disposed so as to cover surfaces that structure the above-described outer edge of the collector terminal 20 and surfaces that structure the above-described outer edge of the electrode body 10. Further, as illustrated in Fig. 8, the fused portion X, at which the inner surfaces of the laminate film 30 are fused together, is disposed on the collector terminal 20. The fused surfaces at the fused portion X preferably do not have a gap. Further, in Fig. 8, an end portion adhered portion Y at which the end portions of the laminate film 30 are fused together is provided. The end portion adhered portion Y may be subjected to bending processing in accordance with the shape of the collector terminal. This is because the excess space can be reduced.

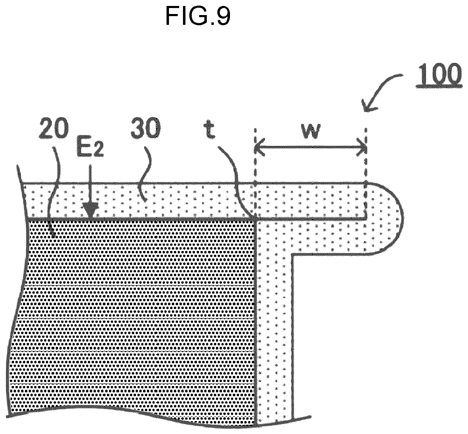

In Fig. 9, when a solid-state battery 100 is seen in a side view from the collector terminal 20 side, the fused portion X is disposed at a corner portion that structures the outer edge E₂ of the collector terminal 20. Specifically, a corner portion that structures the outer edge E₂ of the collector terminal 20 coincides with end portion t of the fused surfaces at the fused portion X. Further, as illustrated in Fig. 9, the width of the fused surfaces at the fused portion X is w. For example, the width w is greater than or equal to 0.1 mm, and may be greater than or equal to 0.3 mm, or may be greater than or equal to 0.6 mm. On the other hand, the width w is, for example, less than or equal to 1.2 mm.

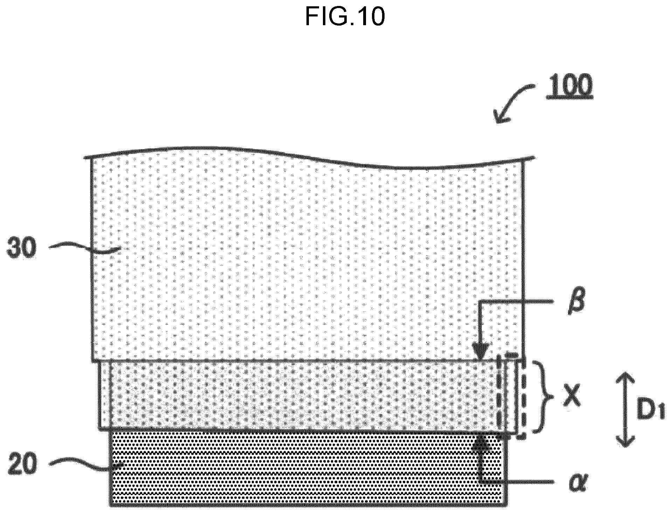

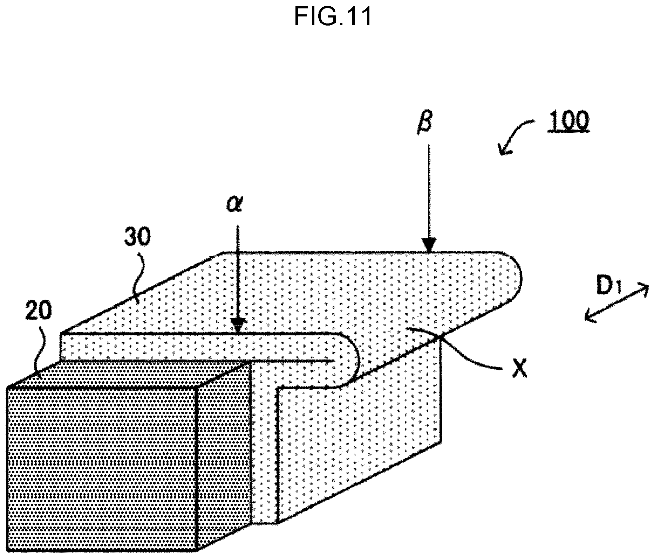

As illustrated in Fig. 10 and Fig. 11, when the solid-state battery 100 is seen in a plan view from the thickness direction, the end portion position of the laminate film 30 at the collector terminal 20 side is *α*, and the position of the laminate film 30 corresponding to the border between the collector terminal 20 and the electrode body 10 is *β*. The fused portion X in Fig. 10 and Fig. 11 is disposed continuously from the end portion position *α* to the position *β*. Further, given that the direction in which the collector terminal 20 extends from the electrode body 10 is D1, it is preferable that the fused portion X be disposed along direction D1. Moreover, the fused portion X may be disposed at at least a portion of the region from the end portion position *α* to the position *β* in direction D1. The length of the fused portion X in direction D1 is, for example, greater than or equal to 1 mm, and may be greater than or equal to 3 mm, or may be greater than or equal to 5 mm.

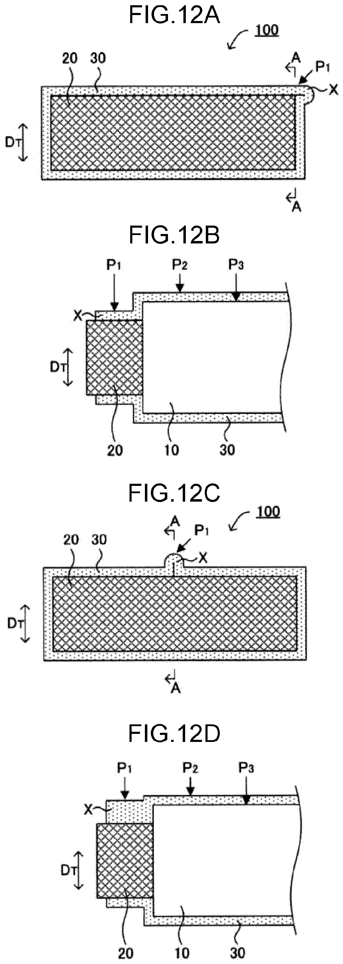

Fig. 12A is a schematic side view in which a portion of the solid-state battery 100 is viewed in a side view from the collector terminal 20 side. Fig. 12B is a cross-sectional view along line A-A of Fig. 12A. As illustrated in Fig. 12A and Fig. 12B, in the thickness direction D_{T} of the solid-state battery 100, the highest position of the fused portion X is P₁, the highest position of the laminate film 30 that is disposed at the electrode body 10 is P₂, and the highest position of the electrode body 10 is P₃. The position P₁ in Fig. 12A and Fig. 12B is lower than the position P₂ in the thickness direction D_{T}. Further, in the thickness direction D_{T}, the position P₁ in Fig. 12A and Fig. 12B is lower than the position P₃, but may be the same as the position P₃ or may be higher than the position P₃. Moreover, in the thickness direction D_{T}, the position P₁ may be lower than the position of the top surface portion of the electrode body 10.

Fig. 12C is a schematic side view in which a portion of the solid-state battery 100 is viewed in a side view from the collector terminal 20 side. Fig. 12D is a cross-sectional view along line A-A of Fig. 12C. The fused portion X in above-described Fig. 12A and Fig. 12B is disposed at a corner portion of the collector terminal 20. On the other hand, as illustrated in Fig. 12C and Fig. 12D, the fused portion X may be disposed at, among the sides that structure the outer edge of the collector terminal 20, a side that extends in the direction intersecting the thickness direction D_{T}. The fused portion X in Fig. 12C and Fig. 12D is disposed at a long side that structures the outer edge of the collector terminal 20 (a long side at the top surface portion side of the electrode body).

Even if the fused portion X is disposed at such a position, it is preferable that the position P₁ be lower than the position P₂ in the thickness direction D_{T}. Further, in the thickness direction D_{T}, the position P₁ in Fig. 12C and Fig. 12D is higher than the position P₃, but may be the same as the position P₃ or may be lower than the position P₃. Moreover, in the thickness direction D_{T}, the position P₁ may be lower than the position of the top surface portion of the electrode body 10.

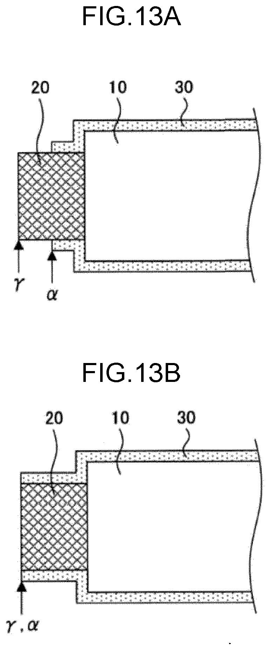

As illustrated in Fig. 13A, the end portion position *α* of the laminate film 30 at the collector terminal 20 side may be further toward the electrode body 10 side than end portion position *γ* of the collector terminal 20 at the side opposite the electrode body 10. Namely, when the battery is seen in a plan view from the thickness direction, the laminate film 30 may cover a portion of the collector terminal 20. In this case, a portion of the collector terminal 20 (the portion that is not covered by the laminate film 30) is exposed. On the other hand, as illustrated in Fig. 13B, the end portion position *α* may coincide with the end portion position *γ.* Namely, when the battery is seen in a plan view from the thickness direction, the laminate film 30 may cover the entire collector terminal 20.

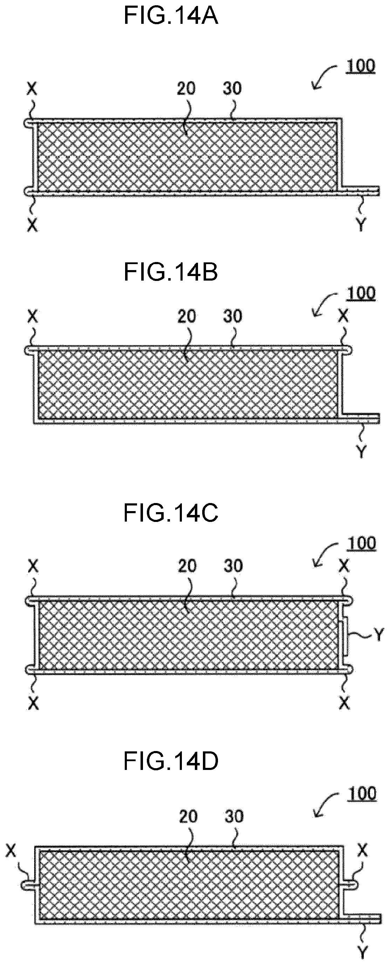

Fig. 14A through Fig. 14D are each a schematic side view in which a portion of the solid-state battery 100 is seen in a side view from the collector terminal 20 side. As illustrated in Fig. 14A, the fused portions X are provided at corner portions that structure the outer edge of the collector terminal 20. Although the two fused portions X are illustrated in Fig. 14A, one fused portion X or three or more fused portions X may be provided with respect to the one collector terminal 20. Thereamong, it is preferable that plural fused portions X be provided with respect to the collector terminal 20. This is because excess portions of the laminate film 30 can be dispersed and absorbed. Further, the end portion adhered portion Y in Fig. 14A is fused due to inner surfaces of the end portions of the laminate film 30 being made to contact one another.

The fused portions X may be provided respectively at two corner portions at the short sides. Further, as illustrated in Fig. 14B, the two fused portions X may be provided respectively at the two corner portions at one long side that structures the outer edge of the collector terminal 20. Moreover, as illustrated in Fig. 14C, four of the fused portions X may be provided respectively at the four corner portions that structure the outer edge (the quadrangle) of the collector terminal 20. The end portion adhered portion Y in Fig. 14C is adhered due to the inner surface of one of the end portions of the laminate film 30 being made to contact the outer surface of the other end portion. Moreover, as illustrated in Fig. 14D, the fused portions X may be provided at intermediate portions (portions that are not corner portions) of sides that structure the outer edge of the collector terminal 20.

### <Method of Manufacturing Electrode Body>

The method of manufacturing an electrode body relating to the present disclosure may have: a step (layered body forming step) of layering a substrate, a first active material layer, an electrolyte layer and a second active material layer in that order, and obtaining a layered body having a region at which the substrate extends outward from the first active material layer, the electrolyte layer and the second active material layer; and a step (cutting-off step) of cutting-off, of the region where the substrate extends-out, a portion of the region where the substrate extends-out, at a position that is away from the region where the first active material layer, the electrolyte layer and the second active material layer are layered. Further, the method of manufacturing an electrode body relating to the present disclosure may include a preparation step before the layered body forming step.

### (Preparation Step)

The preparation step is a step of fabricating the first active material layer, the electrolyte layer and the second active material layer.

In the preparation step, a positive electrode active material layer and a negative electrode active material layer are fabricated as the first active material layer and the second active material layer.

It is preferable that the fabricating of the positive electrode active material layer be carried out by, for example, mixing together components that can be contained in the above-described positive electrode active material layer and a solvent so as to prepare a slurry, and coating the slurry on a substrate and carrying out drying.

It is preferable that the fabricating of the negative electrode active material layer be carried out by, for example, mixing together components that can be contained in the above-described negative electrode active material layer and a solvent so as to prepare a slurry, and coating the slurry on a substrate and carrying out drying.

It is preferable that the fabricating of the electrolyte layer be carried out by, for example, mixing together components that can be contained in the above-described electrolyte layer and a solvent so as to prepare a slurry, and coating the slurry on a substrate and carrying out drying.

The method of kneading the components that can be contained in the slurries at the time of obtaining the slurries is not particularly limited, and examples are a method of kneading by using a kneading device and the like. Examples of the kneading device are an ultrasonic homogenizer, an agitator, a thin film revolving mixer, a dissolver, a homo mixer, a kneader, a roll mill, a sand mill, an attritor, a ball mill, a vibrator mill, and a high-speed impeller mill.

The solvent is not particularly limited, and it suffices for the solvent to be a known solvent that is used in manufacturing solid-state batteries.

As the material of the substrate, for example, materials that are similar to those of the materials of the first collector that is contained in the above-described electrode body can be used, and preferable aspects thereof are also similar.

Here, in fabricating the first active material layer, it is preferable to make it such that there is a region at which the substrate extends outward from the first active material layer. This is in order for the region at which the substrate extends-out to be the region at which the substrate extends-out of the layered body that is described later.

### (Layered Body Forming Step)

The layered body forming step is a step of layering a substrate, a first active material layer, an electrolyte layer and a second active material layer in that order, and obtaining a layered body having a region at which the substrate extends outward from the first active material layer, the electrolyte layer and the second active material layer.

In the layered body forming step, the layered body may be pressed.

Examples of pressing techniques are roll pressing, cold isostatic pressing (CIP), and the like.

The pressure at the time of pressing is preferably greater than or equal to 0.1 t (ton) / cm², and is more preferably greater than or equal to 0.5 t/cm², and is even more preferably greater than or equal to 1 t/cm². The pressure at the time of pressing is preferably less than or equal to 10 t/cm², and is more preferably less than or equal to 8 t/cm², and is even more preferably less than or equal to 6 t/cm².

### (Cutting-Off Step)

The cutting-off step is a step of, of the region where the substrate extends-out, cutting-off a portion of the region where the substrate extends-out at a position that is away from the region where the first active material layer, the electrolyte layer and the second active material layer are layered.

In the cutting-off step, by cutting-off a portion of the region where the substrate extends-out, the region of the layered body where the substrate extends-out becomes the extending portion of the electrode body.

The method of cutting-off a region where the substrate extends-out is not particularly limited, and a known cutting method is used. Examples of known cutting methods are cutting by laser illumination, cutting by a metal blade, and the like.

### (Trimming Step)

The method of manufacturing an electrode body relating to the present disclosure may, as needed, have a step (trimming step) of adjusting the shape of the second active material layer. For example, a method using laser illumination is an example of the method of adjusting the shape of the second active material layer.

### <Method of Manufacturing Solid-State Battery>

The method of manufacturing a solid-state battery relating to the present disclosure has: a step (layered body forming step) of layering a substrate, a first active material layer, an electrolyte layer and a second active material layer in that order, and obtaining a layered body having a region at which the substrate extends outward from the first active material layer, the electrolyte layer and the second active material layer; and a step (cutting-off step) of cutting-off, of the region where the substrate extends-out, a portion of the region where the substrate extends-out at a position that is away from the region where the first active material layer, the electrolyte layer and the second active material layer are layered.

The method of manufacturing the solid-state battery relating to the present disclosure is not particularly limited provided that it has the above-described layered body forming step and cutting-off step. However, it is preferable for the method to include, after the above-described cutting-off step:
a step (preparation step) of preparing a structure having an electrode body and a collector terminal;
a step (first covering step) of covering an outer edge of the electrode body at the structure by a laminate film; and
a step (second covering step) of covering an outer edge of the collector terminal at the structure by the laminate film.

### (Layered Body Forming Step and Cutting-Off Step)

The layered body forming step and the cutting-off step are similar to the layered body forming step and the cutting-off step of the above-described method of manufacturing an electrode body relating to the present disclosure.

### (Preparation Step)

The preparation step is a step of preparing a structure having an electrode body and a collector terminal.

Because the electrode body and the collector terminal are similar to the contents described above in relation to the solid-state battery, description thereof is omitted here.

In this step, the extending portion of the electrode body is bent and is connected to the collector terminal.

### (First Covering Step)

The first covering step of the present disclosure is a step of covering the outer edge of the electrode body at the above-described structure by a laminate film. For example, as illustrated in Fig. 6A and Fig. 6B, in the first covering step, surfaces (e.g., the bottom surface portion 12, the second side surface portion 14, the top surface portion 11 and the fourth side surface portion 16) that structure the outer edge of the electrode body 10 are covered by the laminate film 30. At this time, the electrode body 10 and the laminate film 30 may be adhered to one another. Further, as illustrated in Fig. 6B, end portion overlap portion z at which the end portions of the laminate film 30 overlap is heated. Due thereto, the end portion adhered portion Y where the end portions of the laminate film 30 are fused together is formed. The laminate film may be subjected to a bending process in advance in accordance with the shape of the electrode body.

Further, in the first covering step, usually, as illustrated in Fig. 7C and Fig. 7D, the space S arises between the laminate film 30 and the collector terminal 20. This space S disappears in the second covering step that is described hereinafter, and the fused portion is formed instead.

### (Second Covering Step)

The second covering step in the present disclosure is a step of covering surfaces that structure the outer edge of the collector terminal with the above-described laminate film. Further, the fused portion is formed in the second covering step.

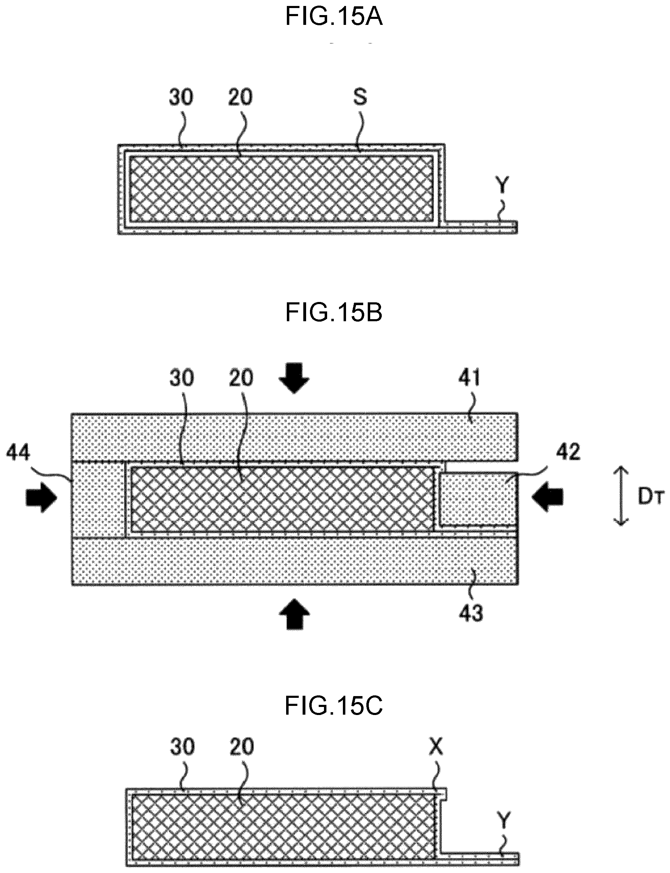

In the second covering step, the collector terminal and the laminate film are adhered together by using jigs that can planarly contact surfaces that structure the outer edge of the collector terminal. Fig. 15A through Fig. 15C are schematic side views illustrating the second covering step in the present disclosure. As illustrated in Fig. 15A, the space S is formed between the laminate film 30 and the collector terminal 20 by the above-described first covering step. Further, the end portion adhered portion Y is formed by the above-described first covering step. Next, as illustrated in Fig. 15B, a jig 41, a jig 42, a jig 43 and a jig 44 are pushed-in with respect to the laminate film 30 and the collector terminal 20. It is preferable that the jigs 41 through 44 are heated. In the thickness direction D_{T}, the length (the length in the up-down direction in the drawing) of the jig 42 is shorter than the length (the length in the up-down direction in the drawing) of the collector terminal 20. Therefore, a gap is formed between the jig 41 and the jig 42, and the excess portion of the laminate film 30 is collected in this gap. Due thereto, as illustrated in Fig. 15C, the fused portion X is formed.

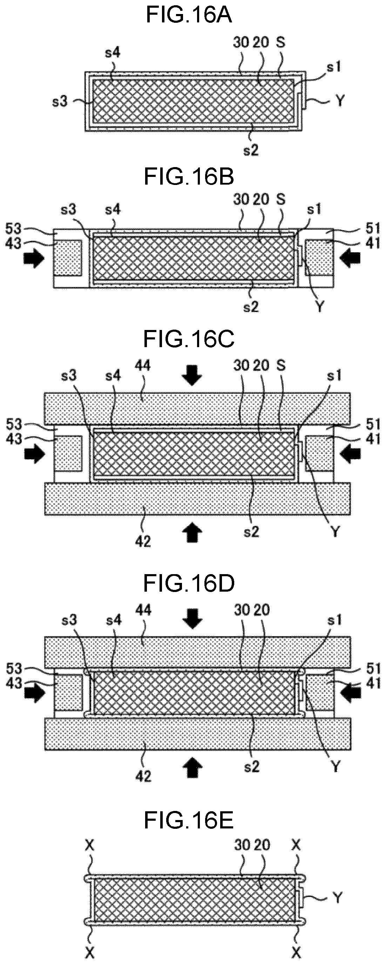

Further, in a case in which the shape of the collector terminal as seen in a side view is quadrangular, the second covering step may have a first adhering processing and a second adhering processing that are described hereinafter. For example, as illustrated in Fig. 16A, the shape of the collector terminal 20 as seen in a side view is quadrangular. This quadrangle has first side s1, second side s2 that is adjacent to the first side s1, third side s3 that is adjacent to the second side s2 and faces the first side s1, and fourth side s4 that is adjacent to the third side s3 and faces the second side s2. In Fig. 16A, the first side s1 and the third side s3 correspond to the short sides that structure the outer edge of the collector terminal 20, and the second side s2 and the fourth side s4 correspond to the long sides that structure the outer edge of the collector terminal 20.

Next, as illustrated in Fig. 16B, the first jig 41 and the third jig 43 are pushed-in from the first side s1 side and the third side s3 side at the collector terminal 20, respectively. Due thereto, the laminate film 30 is adhered to the first side s1 and the third side s3 respectively (first adhering processing). In Fig. 16B, the first jig 41 and the third jig 43 have a first elastic member 51 and a third elastic member 53, respectively. Examples of the material of the elastic members are silicone rubber and fluororubber.

Next, as illustrated in Fig. 16C and Fig. 16D, the second jig 42 and the fourth jig 44 are pushed-in from the second side s2 side and the fourth side s4 side at the collector terminal 20, respectively. Due thereto, the laminate film 30 is adhered to the second side s2 and the fourth side s4 respectively (second adhering processing). At this time, due to the pushing-in of the second jig 42 and the fourth jig 44, the first elastic member 51 and the third elastic member 53 are compressively deformed. The fused portion X is thereby formed as illustrated in Fig. 16E.

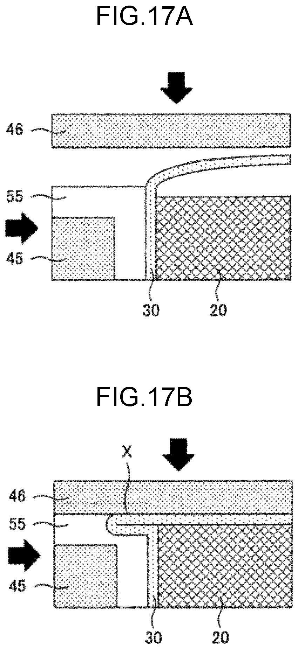

A situation in which the fused portion X is formed is described by using Fig. 17A and Fig. 17B. As illustrated in Fig. 17A, in the first adhering processing, a jig 45 that has an elastic member 55 is pushed into the collector terminal 20. While this state is maintained, in the second adhering processing, the elastic member 55 is compressively deformed by a jig 46 as illustrated in Fig. 17B. At this time, because the elastic member 55 is softer than the collector terminal 20, the jig 45 and the jig 46, the elastic member 55 compressively deforms first, and, accompanying this compressive deformation, the excess portion of the laminate film 30 is folded-over, and the fused portion X is formed.

In the present disclosure, it is preferable that the first side and the third side correspond to the short sides that structure the outer edge of the collector terminal 20, and the second side and the fourth side correspond to the long sides that structure the outer edge of the collector terminal 20. In this case, in the first adhering processing, the first jig and the third jig that are not heated may be pushed-in, and, in the second adhering processing, the second jig and the fourth jig that are heated may be pushed-in. By heating the outer edge of the collector terminal 20 over the entire periphery thereof by heat input only from the jigs at the long sides (the second jig and the fourth jig), the structure of the sealing device can be simplified.

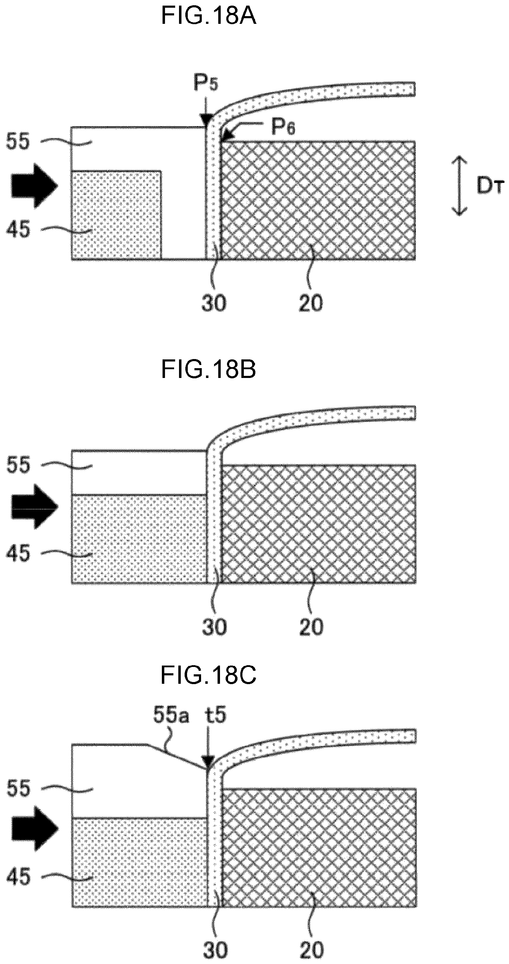

As illustrated in Fig. 18A, it is preferable that, in the state in which the jig 45 that has the elastic member 55 is pushed-in, position P₅ of the peak point of the collector terminal 20 side end portion of the elastic member 55 is higher in the thickness direction D_{T} than position P₆ of the peak point of the elastic member 55 side end portion of the collector terminal 20. By satisfying the relationship position P₅ > position P₆, the inner surfaces of the laminate film 30 can be compressed strongly, and a fused portion of even better sealability is formed. Namely, it is preferable that the lengths of the elastic member 55 and the jig 45 in the thickness direction D_{T} are longer than the length of the collector terminal 20 in the thickness direction D_{T}. Further, in Fig. 18A, a portion of the elastic member 55 is disposed between the jig 45 and the collector terminal 20. On the other hand, as illustrated in Fig. 18B, the elastic member 55 does not have to be disposed between the jig 45 and the collector terminal 20. Further, as illustrated in Fig. 18C, a cut-out portion 55a may be provided in end portion t5, which is at the collector terminal 20 side, of the elastic member 55. By providing this cut-out portion 55a, the fused portion can be formed stably.

### EXAMPLES

Examples are described hereinafter, but the present invention is not in any way limited to these Examples. Note that, in the following description, "parts" and "%" are all based on mass unless otherwise indicated.

### <Fabrication of Positive Electrode Active Material>

By using a rolling flow type coating device (manufactured by Powrex Corp.), lithium niobate was coated in atmospheric air on particles whose main phase was Li_{1.15}Ni_{1/3}Co_{1/3}O₂. Firing was carried out in atmospheric air, and a positive electrode active material having a coated layer of lithium niobate was obtained.

### <Example 1>

### [Fabrication of Electrode Body]

### (Preparation Step)

### - Fabrication of Positive Electrode Active Material Layer (Second Active Material Layer) -

2 parts of polyvinylidene fluoride (PVdF) serving as a binder, 100 parts of a positive electrode active material, 30 parts of a sulfide solid electrolyte (an Li₂S-P₂S₅ glass ceramic), 2.5 parts of carbon fibers ("VGCF-H" manufactured by Showa Denko K.K.) serving as a conduction assistant, and butyl acetate serving as a solvent were added into a polypropylene container such that the solid content became 65%, and stirring was carried out for 30 seconds by using an ultrasonic dispersing device (UH-50 manufactured by SMT Co., Ltd.). Then, the polypropylene container was shaken for 3 minutes by a shaker (TTM-1 manufactured by Sibata Scientific Technology Ltd.), and was stirred for 30 seconds in the ultrasonic dispersing device, and was further shaken for 3 minutes by the shaker, and a slurry was thereby obtained. This slurry was coated on an aluminum foil that was a substrate by an applicator by a blade method. Thereafter, by naturally drying the coated film, and drying for 30 minutes on a hot plate of 100°C, a layered product of the substrate and the positive electrode material layer was fabricated. Note that the coated amount of the slurry with respect to the substrate was adjusted such that the thickness of the positive electrode active material layer became 15 *µ*m at the time of pressing at 4 t/cm².

### - Fabrication of Negative Electrode Active Material Layer (First Active Material Layer) -

2 parts of polyvinylidene fluoride (PVdF) serving as a binder, 100 parts of Li₄Ti₅O₁₂ as a negative electrode active material, 35 parts of a sulfide solid electrolyte (an Li₂S-P₂S₅ glass ceramic, and butyl acetate serving as a solvent were added into a polypropylene container such that the solid content became 65%, and stirring was carried out for 30 seconds by using an ultrasonic dispersing device (UH-50 manufactured by SMT Co., Ltd.), and a slurry was thereby obtained. This slurry was coated on the surface of an aluminum foil that was a substrate by an applicator by a blade method. At this time, the slurry was not coated on a portion of the substrate, such that a region at which the substrate extended-out from the negative electrode active material layer was formed. Thereafter, by naturally drying the coated film, and drying for 30 minutes on a hot plate of 100°C, a negative electrode material layer was fabricated on the substrate.

Thereafter, a negative electrode active material layer was fabricated by the same processes also on the reverse surface of the aluminum foil that was the substrate. At this time, at the region of the obverse of the aluminum foil at which coating of the slurry was not carried out, coating of the slurry was not carried out on the reverse surface as well, and a portion of the substrate was exposed. A layered product of the substrate and the negative electrode active material layer was obtained in this way.

### - Fabrication of Electrolyte Layer -

Heptane was added as a solvent into a polypropylene container such that the solid content became 60%, and 2 parts of a butadiene rubber binder serving as the binder and 100 parts of a sulfide solid electrolyte (an Li₂S-P₂S₅ glass ceramic) were added, and the polypropylene container was shaken for 30 minutes by a shaker (TTM-1 manufactured by Sibata Scientific Technology Ltd.), and was stirred for 30 seconds in an ultrasonic dispersing device (UH-50 manufactured by SMT Co., Ltd.), and was further shaken for 3 minutes by the shaker, and a slurry was thereby obtained. This slurry was coated on an aluminum foil that was a substrate by an applicator by a blade method. Thereafter, by naturally drying the coated film, and drying for 30 minutes on a hot plate of 100°C, a layered product of the substrate and the electrolyte layer was fabricated.

### (Layered Body Forming Step)

The layered product of the substrate and the negative electrode active material layer, and the layered product of the substrate and the electrolyte layer, were affixed together such that the negative electrode active material layer and the electrolyte layer contacted one another, and pressing was carried out at 1.6 t/cm². Thereafter, the substrate that contacted the electrolyte layer was peeled-off. Next, the layered product of the substrate and the positive electrode active material layer was affixed such that the positive electrode active material layer and the electrolyte layer contacted one another, and pressing was carried out at 1.6 t/cm². Thereafter, the substrate that contacted the positive electrode active material layer was peeled-off. Thereafter, by carrying out pressing at 5 t/cm² (this pressing is also called the "final pressing"), a layered body having a layered structure of the substrate / the negative electrode active material layer / the electrolyte layer / the positive electrode active material layer was obtained. At this layered body, a portion of the substrate that contacted the negative electrode active material layer was exposed.

### (Cutting-Off Step and Trimming Step)

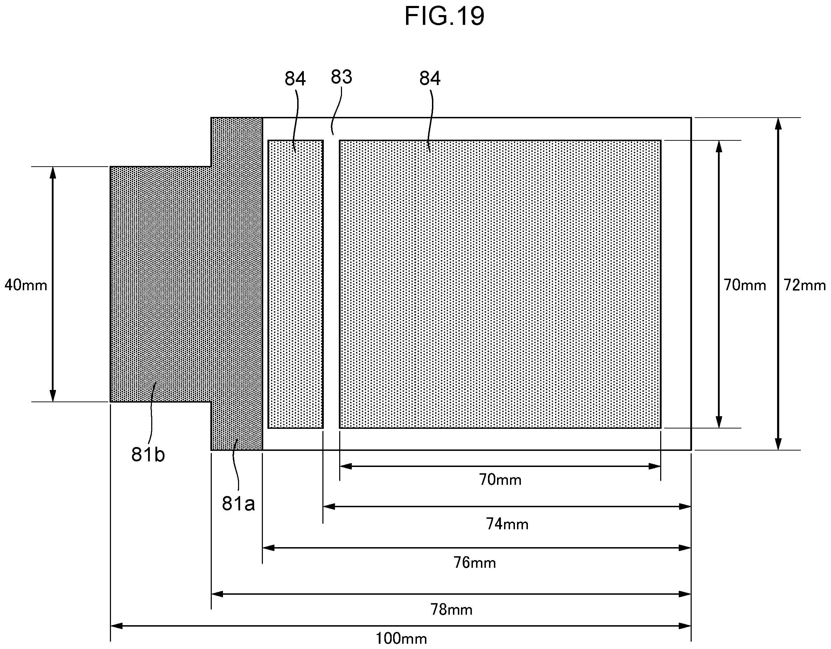

The positive electrode active material layer was laser trimmed, and, of the layered body, a portion of the region where the substrate extended-out was cut-off. The negative electrode collector (first collector), which had an extending portion including a region of a width smaller than the maximum width of the negative electrode collector, was fabricated and was as illustrated in Fig. 19. The reference numerals in Fig. 19 are the same as those in Fig. 1.

### (Other Steps)

Acetylene black and an acrylic binder were weighed-out so as to become a ratio, based on volume, of acetylene black : acrylic binder = 40:60, and were mixed together. Then, ethyl acetate was added, and a carbon coating composition was prepared. Next, the carbon coating composition was coated on an aluminum foil so as to become a film thickness of 2 *µ*m, and drying was carried out for 1 hour at 100°C, and a positive electrode collector (second collector) was fabricated.

The positive electrode collector was affixed so as to not jut-out from the positive electrode active material layer of the layered body that had undergone the above-described cutting-off step, and, by carrying out pressing at 5 MPa under the condition of 140°C, an electrode body was obtained.

### [Fabricating of Solid-State Battery]

A solid-state battery was obtained through the (Preparation Step), (First Coating Step) and (Second Coating Step) in the above-described <Method of Manufacturing Solid-State Battery>.

This solid-state battery had an electrode body, a collector terminal disposed at a side surface portion of the electrode body, and a laminate film covering the electrode body. When the solid-state battery was seen in a side view from the collector terminal side, the outer edge of the collector terminal was positioned further toward the inner side than the outer edge of the electrode body, and the laminate film was disposed so as to cover surfaces structuring the outer edge of the collector terminal and surfaces structuring the outer edge of the electrode body, and a fused portion, at which the inner surfaces of the laminate film were fused together, was disposed on the collector terminal.

### <Example 2>

A solid-state battery was obtained by the same processes as in Example 1, except that the pressure in the final pressing in the (Layered Body Forming Step) was changed to 4 t/cm².

### <Comparative Example 1>

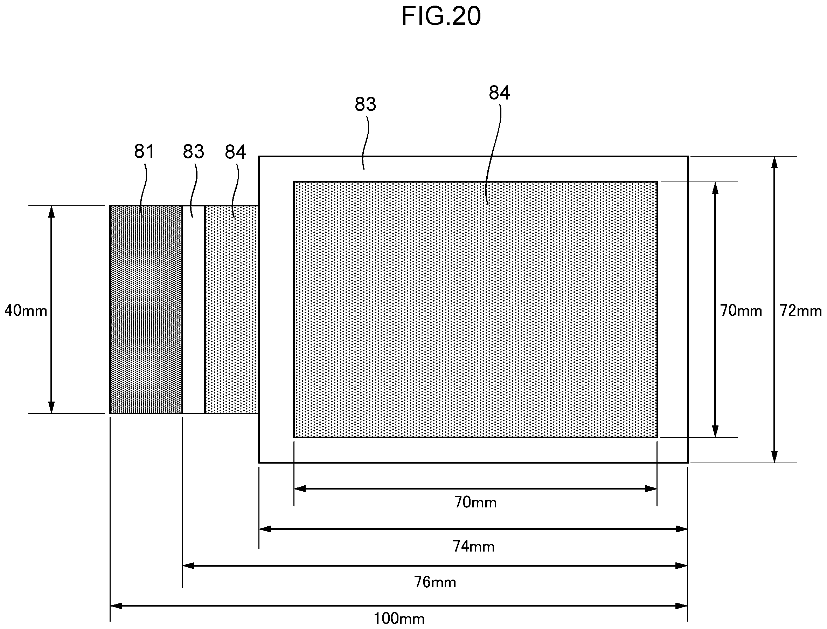

A solid-state battery was obtained by the same processes as in Example 1, except that in the (Cutting-Off Step and Trimming Step), the positive electrode active material layer was laser-trimmed, and the region of the layered body where the substrate was exposed was cut-off, and the solid-state battery was as illustrated in Fig. 20. The reference numerals in Fig. 20 are the same as those in Fig. 1.

### <Comparative Example 2>

A solid-state battery was obtained by the same processes as in Example 2, except that in the (Cutting-Off Step and Trimming Step), the positive electrode active material layer was laser-trimmed, and the region of the layered body where the substrate extended-out was cut-off, and the solid-state battery was as illustrated in Fig. 20.

### <Reference Example>

A solid-state battery was obtained by the same processes as in Example 1, except that the pressure of the final pressing in the (Layered Body Forming Step) was changed to 2 t/cm².

### <Evaluation>

### (Total Young's Modulus of Active Material Layers and Electrolyte Layer)

The total Young's modulus of the active material layers and the electrolyte layer of the electrode bodies obtained in the respective examples were measured in accordance with the process described in " • Process for Measuring Total Young's Modulus of Active Material Layers and Electrolyte Layer". The results are shown in Table 1.

### (Evaluation of Severability of Extending Portion)

A vibration test was carried out by the following processes, with the restraining pressure of the electrode bodies in the solid-state batteries obtained in the respective examples being made to be 5 MPa.

First, vibration was applied for 15 minutes in the longitudinal direction (the extending direction of the extending portion). The frequency at this time was varied from 7 Hz to 200 Hz, and was further varied from 200 Hz to 7 Hz. Next, vibration was applied for 15 minutes in the lateral direction (the direction perpendicular to the extending direction of the extending portion). The frequency at this time was varied from 7 Hz to 200 Hz, and was further varied from 200 Hz to 7 Hz. Moreover, vibration was applied for 15 minutes in the thickness direction of the electrode body. The frequency at this time was varied from 7 Hz to 200 Hz, and was further varied from 200 Hz to 7 Hz.

With the above-described processes being one set, the vibration test was carried out by carrying out a total of 12 sets.

Thereafter, the solid-state battery was dismantled, and it was confirmed whether or not severing of the extending portion had arisen. The results are shown in Table 1. Cases in which severing of the extending portion arose are listed as "severed", and cases in which severing of the extending portion did not occur are listed as "not severed".

**[Table 1]**

| | structure of electrode body | evaluation | |
|---|---|---|---|
| | | total Young's modulus (GPa) of first active material layer, electrolyte layer and second active material layer | evaluation of severability of extending portion |
| Ex.1 | Fig. 19 | 6 | not severed |
| Ex.2 | Fig. 19 | 12 | not severed |
| Comp.Ex.1 | Fig. 20 | 6 | severed |
| Comp.Ex.2 | Fig. 20 | 12 | severed |
| Reference Ex. | Fig. 19 | 3 | not severed |

In Table 1, the "structure of electrode body" indicates to which of Fig. 19 or Fig. 20 the electrode body after the (Cutting-Off Step and Trimming Step) corresponds.

Note that, in the Reference Example, because the total Young's modulus (GPa) of the first active material layer, the electrolyte layer and the second active material layer was low, the resistance of the solid-state battery was high to the extent of not being able to withstand actual use.

From the above results, it can be understood that the electrode bodies of the present Examples were electrode bodies at which, even though the extending portions were bent, it was difficult for severing of the extending portions to arise.

## Claims

1. An electrode body, comprising, in the following order, a first collector, a first active material layer, an electrolyte layer, a second active material layer and a second collector, wherein:
the first collector has an extending portion that extends outward from the first active material layer, the electrolyte layer, the second active material layer and the second collector, and
the extending portion includes a region having a width that is smaller than a maximum width of the first collector.

2. The electrode body of claim 1, wherein a minimum width of the extending portion is greater than or equal to 70% and less than or equal to 80% of a maximum width of the first collector.

3. The electrode body of claim 1 or claim 2, wherein a total Young's modulus of the first active material layer, the electrolyte layer and the second active material layer is greater than or equal to 6 GPa.

4. A solid-state battery, comprising the electrode body of any one of claims 1 through 3.

5. A method of manufacturing an electrode body, the method comprising:
layering, in the following order, a substrate, a first active material layer, an electrolyte layer and a second active material layer, and obtaining a layered body having a region in which the substrate extends outward from the first active material layer, the electrolyte layer and the second active material layer; and
cutting off a portion of the region at which the substrate extends outward at a position that is apart from a region at which the first active material layer, the electrolyte layer and the second active material layer are layered.
